Europäisches Patentamt

European Patent Office

Office européen des brevets

(19)

(11) Numéro de publication: **0 060 795**
**B1**

## FASCICULE DE BREVET EUROPEEN

(45) Date de publication du fascicule du brevet:
**20.03.85**

(21) Numéro de dépôt: **82420010.9**

(22) Date de dépôt: **21.01.82**

(51) Int. Cl.⁴: **A 01 J 25/06,** A 01 J 25/02

(54) **Cuve pour la fabrication de fromage, avec dispositif de décaillage et de brassage.**

(30) Priorité: **12.03.81 FR 8105354**

(43) Date de publication de la demande:
**22.09.82 Bulletin 82/38**

(45) Mention de la délivrance du brevet:
**20.03.85 Bulletin 85/12**

(84) Etats contractants désignés:
**AT CH DE GB IT LI NL**

(56) Documents cités:
**DE - A - 1 921 059
DE - B - 1 016 050
FR - A - 1 440 383
FR - A - 2 365 288
GB - A - 299 851
US - A - 3 744 405**

(73) Titulaire: **CHALON-MEGARD, F-01460 La Cluse (FR)**

(72) Inventeur: **Megard, Pierre, 21 route d'Apremont,
F-01130 Nantua (Ain) (FR)**

(74) Mandataire: **Maureau, Pierre, Cabinet GERMAIN &
MAUREAU Le Britannia - Tour C 20, Boulevard E.
Déruelle, F-69003 Lyon (FR)**

## Description

La présente invention se rapporte à une cuve pour la fabrication de fromage, avec dispositif de décaillage et de brassage d'une masse de caillé contenue dans la cuve, celle-ci étant équipée d'un chariot mobile le long de moyens de guidage horizontaux situés au-dessus de la cuve et définissant un axe de déplacement en translation longitudinale, un système d'attache pour des outils de décaillage et de brassage étant prévu au-dessous de ce chariot, et un moteur étant prévu pour l'entraînement en rotation desdits outils autour d'un axe vertical.

Une telle cuve intéresse la fabrication des fromages de tous types, mais plus particulièrement la fabrication des fromages du type pâtes molles, pâtes persillées, pâtes demi-cuites non pressées, etc... dans lesquelles la qualité du découpage de la masse de caillé est un facteur très important pour le rendement et la qualité du produit fini.

Une cuve pour la fabrication de fromages avec dispositif de décaillage et de brassage, du genre indiqué ci-dessus, est connue par le brevet DE-B-1 016 050. Cette cuve est équipée d'un chariot unique, mobile en translation longitudinale le long de rails situés au-dessus de la cuve, et portant directement les outils de décaillage et de brassage, ainsi que le moteur pour l'entraînement en rotation de ces outils. La cuve possède une forme longue et étroite, avec un fond incurvé interdisant toute possibilité de déplacement des outils en direction transversale. Ainsi, le décaillage est réalisé seulement par combinaison d'un mouvement de translation longitudinale des outils de décaillage et d'un mouvement de rotation de ces outils autour d'un axe vertical. Il en résulte une limitation de la capacité de la cuve, ainsi qu'un décaillage irrégulier car ne reposant pas sur un principe de découpe suivant trois axes géométriques dans l'espace, mais conduisant à des lanières de caillé qui arrivent, au hasard des courbes décrites par les outils de décaillage, à être de nouveau coupées jusqu'à ce que des grains soient formés, qui sont d'autant plus irréguliers dans leur taille et dans leur forme que le grain à obtenir doit être de taille importante. En effet, seule la durée du décaillage permet par une découpe prolongée d'obtenir des résultats à peu près corrects pour les pâtes cuites et demi-cuites pressées.

Cette lacune est donc particulièrement ressentie dans la fabrication des pâtes molles et intermédiaires, telles que pâtes demi-cuites non pressées, pâtes persillées, etc..., où la taille des grains doit être très importante, ceci à partir d'un caillé relativement fragile.

De plus, la cuve selon le brevet DE-B-1 016 050 ne procure aucun déplacement vertical qui permettrait, d'une part, de faire travailler un même outil, notamment un outil de brassage, à un niveau variable, et surtout d'extraire automatiquement un outil de la cuve pour son remplacement, opération qui soit être fréquemment effectuée puisque le même chariot reçoit alternativement des outils de décaillage et des outils de brassage. La mise en place des outils pour leur mise en place ou leur changement est donc peu commode et ne peut être effectuée que manuellement.

Une autre cuve pour la fabrication de fromage, avec une forme et un équipement assez analogues, est décrite dans la demande de brevet DE-A-1 921 059. Cette cuve comporte en plus de la possibilité de déplacement longitudinal une possibilité de déplacement vertical, mais elle constitue uniquement une installation de décaillage, non prévue pour le brassage, aucun moyen pouvant entraîner en rotation un outil de brassage n'étant prévu.

La présente invention vise à remédier à l'ensemble des inconvénients précédents, et son but est donc d'obtenir, en définissant des trajectoires d'outils suivant des axes géométriques bien précis, d'une part un décaillage donnant une taille absolument définie aux grains de caillé, et d'autre part un brassage à mouvements combinés, c'est-à-dire résultant de la combinaison de deux ou plus des mouvements élémentaires suivants: rotation, translation verticale, translation transversale et translation longitudinale, la combinaison de tous ces mouvements permettant par ailleurs de travailler à l'intérieur d'une cuve de très grande capacité, et facilitant aussi la mise en place et le changement des outils.

A cet effet, la cuve selon l'invention pour la fabrication de fromage, appartenant au genre indiqué plus haut, est de forme générale parallélépipédique et est encore équipée:

— d'au moins un chariot secondaire monté mobile en translation sur un poutre horizontale portée par le chariot à déplacement longitudinal et définissant un axe de déplacement en translation transversale; et

— d'au moins un troisième chariot monté mobile en translation sur une glissière verticale portée par le chariot secondaire et définissant un axe de déplacement en translation verticale;

le système d'attache des outils de décaillage et de brassage, ainsi que le moteur pour l'entraînement en rotation desdits outils, étant portés par le troisième chariot.

Dans la version la plus simple, les différents outils de décaillage et de brassage sont mis en place manuellement. Dans une version plus perfectionnée, tous les outils sont stockés dans un magasin situé à côté de la cuve, où ils sont prélevés et remis en place automatiquement par un système de préhension. De plus, à l'intérieur de ce magasin de stockage, peuvent être prévus des moyens de lavage des outils sans intervention manuelle, notamment sous la forme de «boules de nettoyage». Dans une exécution du type «fermée», tous les outils pourraient être stockés à une ou deux extrémités longitudinales, dans un ou deux magasins prévus à cet effet.

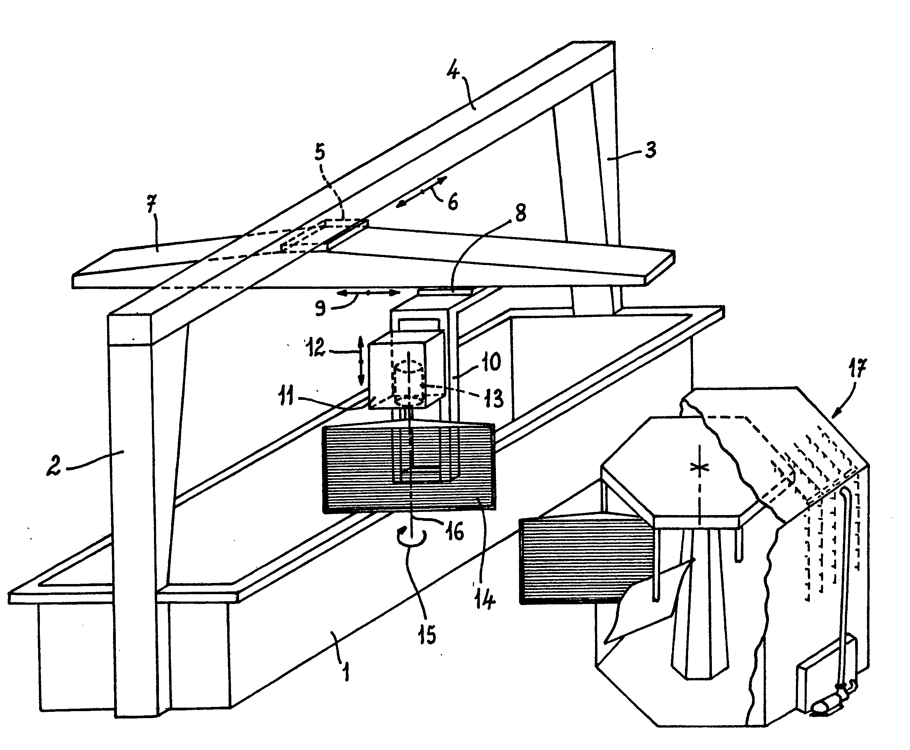

De toute façon, l'invention sera bien comprise, et ses avantages seront mis en évidence, à l'aide de la description qui suit, en référence à l'unique figure du dessin schématique annexé représentant, à titre d'exemple non limitatif, une forme de réalisation de cette cuve pour la fabrication de fromages, vue en perspective.

La cuve proprement dite, désignée par le repère 1, possède une forme parallélépipédique. Deux montants 2 et 3, situés aux extrémités de la cuve 1, supportent une poutre horizontale 4 s'étendant au-dessus de ladite cuve 1, dans le sens longitudinal. Un chariot principal 5 est monté mobile le long de la poutre 4, son déplacement en translation longitudinale étant symbolisé par une flèche 6. Le chariot principal 5 porte une poutre horizontale 7, s'étendant dans le sens transversal. Un chariot secondaire 8 est monté mobile le long de la poutre 7, son déplacement en translation transversale étant symbolisé par une flèche 9. Le chariot secondaire 8 porte une glissière verticale 10, le long de laquelle est monté mobile un troisième chariot 11, dont le déplacement en translation verticale est symbolisé par une flèche 12. Sur ce dernier chariot 11 est monté un moteur 13 d'entrainement en rotation des outils de brassage. Un système d'attache rapide et universel permet le montage d'outils divers, rotatifs ou non, sous le dernier chariot 11.

Le décaillage est réalisable de la façon suivante, en faisant intervenir les différents chariots 5, 8 et 11:

— dans le sens longitudinal, par déplacement d'un tranche-caillé à lames ou fils horizontaux, cet outil particulier étant indiqué en 14 sur le dessin,

— également dans le sens longitudinal, par déplacement d'un tranche-caillé à lames ou fils verticaux, la combinaison de ces deux actions créant des lanières horizontales de section carrée ou rectangulaire, orientées suivant la dimension longitudinale de la cuve 1,

— puis dans le sens transversal, par déplacement d'un tranche-caillé à lames ou fils verticaux, coupant les lanières précitées en petits parallélépipèdes ou cubes de section géométrique très bien définie par ces différents mouvement et par les caractéristiques des outils tels que 14.

Ainsi, on atteint le but recherché, qui est d'obtenir un grain homogène, de forme et de volume précis.

Le brassage, intervenant après le décaillage, est réalisé au moyen d'un outil de brassage non représenté, remplaçant le tranche-caillé 14 sur le chariot 11, et agissant par des mouvements combinés:

— rotation sur lui-même suivant la flèche 15, autour d'un axe vertical 16, à vitesse variable, commandée par le moteur 13,

— translation longitudinale, transversale et même verticale, résultant du déplacement des chariots 5, 8 et 11,

permettant ainsi un brassage efficace à très faible vitesse.

Tous les outils de décaillage 14 et de brassage, employés au cours du fonctionnement qui vient d'être décrit, sont stockés sur le côté de la cuve 1, dans un magasin 17 représenté très schématiquement. Le troisième chariot 11 comporte un système de préhension automatique, tel qu'à mâchoires pneumatiques, pour prélever et remettre en place les outils dans ce magasin de stockage 17.

L'automatisation de la cuve objet de l'invention peut être encore perfectionnée, en l'équipant en outre d'un système de programmation des déplacements en translation respectivement longitudinale, transversale et verticale des trois chariots 5, 8 et 11, ainsi que de la marche du moteur 13 d'entraînement en rotation des outils de brassage. Ce système de programmation est facilement réalisable, suivant les techniques connues de la «commande numérique», grâce à la forme géometrique de la cuve 1 et à la décomposition des mouvements, par les trois chariots 5, 8 et 11, suivant trois axes de coordonnées rectangulaires. Les trajectoires, vitesses et temps d'opération des outils peuvent être ainsi parfaitement définis, ce qui procure une garantie absolue du respect des normes prédéterminées de décaillage et de brassage. Les changements d'outils peuvent, bien entendu, être également inclus dans la programmation.

## Revendications

1. Cuve pour la fabrication de fromage avec dispositif de décaillage et de brassage d'une masse de caillé contenue dans la cuve (1), celle-ci étant équipée d'un chariot (5) mobile le long de moyens de guidage horizontaux (4) situées au-dessins de la cuve (1) et définissant un axe de déplacement en translation longitudinale (flèche 6), un système d'attache pour des outils (14) de décaillage et de brassage étant prévu au-dessous de ce chariot (5), et un moteur (13) étant prévu pour l'entraînement en rotation desdits outils autour d'un axe verticale (16), caractérisée en ce que cette cuve (1), de forme générale parallélépipédique, est encore équipée:

— d'au moins un chariot secondaire (8) monté mobile en translation sur une poutre horizontale (7) portée par la chariot (5) à déplacement longitudinal et définissant un axe de déplacement en translation transversale (flèche 9); et

— d'au moins un troisième chariot (11) monté mobile en translation sur une glissière verticale (10) portée par le chariot secondaire (8) et définissant un axe de déplacement en translation verticale (flèche 12);
le système d'attache des outils (14) de décaillage et de brassage, ainsi que le moteur (13) pour l'entraînement en rotation desdits outils (14), étant portés par le troisième chariot (11).

2. Cuve pour la fabrication de fromage, avec dispositif de décaillage et de brassage, selon la revendication 1, caractérisée en ce qu'un magasin (17) pour le stockage des outils (14) de décaillage et de brassage est prévu sur le côté de ladite cuve (1), le troisième chariot (11) comportant un système de préhension automatique pour prélever et remettre en place les outils (14) de décaillage et de brassage dans ce magasin (17).

3. Cuve pour la fabrication de fromage, avec dispositif de décaillage et de brassage, selon la revendication 2, caractérisée en ce qu'à l'intérieur du magasin (17) de stockage des outils (14) de décaillage et de brassage sont prévus des moyens de lavage automatique de ces outils.

4. Cuve pour la fabrication de fromage, avec dispositif de décaillage et de brassage, selon l'une quelconque des revendications 1 à 3, caractérisée en ce qu'elle est en outre équipée d'un système de programmation des déplacement en translation respectivement longitudinale, transversale et verticale pour les trois chariots (5, 8, 11), ainsi que de la marche du moteur (13) d'entraînement en rotation des outils de brassage.

## Claims

1. Basin for making cheese with a device for cutting and stirring a mass of curdled milk holded in the basin (1), said basin being provided with a carriage (5) displaceable along horizontal guide means (4) extending above said basin (1) and defining a longitudinal displacement axis (arrow 6), a holder system for cutting and stirring tools (14) extending under said carriage (5), and a motor (13) being provided for rotating said tools about a vertical axis (16), characterized in that the basin (1), of generally parallelepipedal shape, is further provided with:
— at least one secondary carriage (8) displaceable along a horizontal beam (7) carried on the longitudinally displaceable carriage (5) and defining a transversal displacement axis (arrow 9); and
— at least one third carriage (11) displaceable along an upright slide (10) carried on the secondary carriage (8) and defining a vertical displacement axis (arrow 12);
the holder system for the cutting and stirring tools (14) and the motor (13) for rotating said tools (14) being carried on the third carriage (11).

2. Basin for making cheese with a cutting and stirring device according to claim 1, characterized in that a magazine (17) for housing the cutting and stirring tools (14) is provided beside the basin (1), the third carriage (11) having automatic holder means for taking out and bringing back the cutting and stirring tools (14) in said magazine (17).

3. Basin for making cheese with a cutting and stirring device according to claim 2, characterized in that the magazine (17) for housing the cutting and stirring tools (14) includes automatical means for washing said tools.

4. Basin for making cheese with a cutting and stirring device according to any one of claims 1 to 3, characterized in that it is further provided with programming means for controlling the displacements in respective longitudinal, transversal and vertical directions for the three carriages (5, 8, 11) and for the operation of the motor (13) rotating the stirring tools.

## Patentansprüche

1. Käsetrog mit Vorrichtung zum Rühren und Zerteilen von in dem Käsetrog (1) befindlicher eingedickter Milch, mit einem Wagen (5), der entlang von horizontalen Führungsmitteln (4) bewegbar ist, die über dem Käsetrog (1) angeordnet sind und eine Verstellachse für eine Längstranslation (Pfeil 6) definieren, mit einem unterhalb des Wagens (5) vorgesehenen Befestigungssystem für Rühr- und Zerteilwerkzeuge (14) und mit einem Motor (13) für den Drehantrieb der Werkzeuge um eine vertikale Achse (16), dadurch gekennzeichnet, dass der Käsetrog (1), der eine im wesentlichen parallelepipedische Form aufweist, noch folgendermassen ausgestattet ist:

— mit mindestens einem zweiten Wagen (8), der translationsbeweglich an einem horizontalen Träger (7) angeordnet ist, der vom Wagen (5) zur Verstellung in Längsrichtung getragen ist und eine Verstellachse für eine Quertranslation (Pfeil 9) definiert; und

— mit mindestens einem dritten Wagen (11), der translationsbeweglich an einer vertikalen Gleitbahn (10) angeordnet ist, die von dem zweiten Wagen (8) getragen ist und eine Verstellachse für eine Vertikaltranslation (Pfeil 12) definiert, wobei das Befestigungssystem für die Rühr- und Zerteilwerkzeuge (14) sowie der Motor (13) für den Drehantrieb der Werkzeuge (14) von dem dritten Wagen (11) getragen sind.

2. Käsetrog mit Vorrichtung zum Rühren und Zerteilen von eingedickter Milch nach Anspruch 1, dadurch gekennzeichnet, dass an der Seite des Käsetroges (1) ein Magazin (17) zur Lagerung von Rühr- und Zerteilwerkzeugen (14) vorgesehen ist, wobei der dritte Wagen (11) ein automatisches Greifsystem zum Aufnehmen und Zurückbringen der Rühr- und Zerteilwerkzeuge (14) in das Magazin (17) aufweist.

3. Käsetrog mit Vorrichtung zum Rühren und Zerteilen von eingedickter Milch nach Anspruch 2, dadurch gekennzeichnet, dass im Innern des Magazins (17) zur Lagerung der Rühr- und Zerteilwerkzeuge (14) Mittel zum automatischen Waschen der Werkzeuge vorgesehen sind.

4. Käsetrog mit Vorrichtung zum Rühren und Zerteilen von eingedickter Milch nach einem der Ansprüche 1 bis 3, dadurch gekennzeichnet, dass er des weiteren ein System zur Programmierung der jeweiligen Längs-, Quer- und Vertikaltranslationsbewegung für die drei Wagen (5, 8, 11) sowie des Betriebs des Motors (13) zum Antrieb für die Drehbewegung der Rührwerkzeuge aufweist.

0 060 795